# EUROPEAN PATENT APPLICATION

(11) **EP 3 005 886 A1**
(43) Date of publication of application: **13.04.2016**
(21) Application number: 15190679.9
(22) Date of filing: 13.07.2012
(51) Int. Cl.: A23L 33/17, B01J 13/04, C08J 3/075

(54) **FOOD-GRADE BLUE ENCAPSULATE AND PROCESS FOR THE PRODUCTION THEREOF**

(30) Priority: 15.07.2011 EP 11174259
(62) Divisional of application: 12735533.7
(71) Applicant: Nestec S.A., 1800 Vevey (CH)
(72) Inventor: BRAGA Ana Luiza, Intermares-Cabedelo-Paraiba 58310-971 (BR); SOUSSAN, ELODIE, 14130 Le Breuil en Auge (FR); SCHMITT, Christophe Joseph Etienne, 1077 Servion (CH); KOLODZIEJCZYK, Eric Stanislas, 1800 Vevey (CH)
(74) Representative: Cogniat, Eric Jean Marie

(57) **Abstract**

A food-grade blue encapsulate is disclosed, which comprises gelled proteins associated with metal ions and a colorant component. The colorant component comprises anthocyanins, anthocyanidins, or mixtures thereof. A process for producing the encapsulate is also disclosed.

## Description

### TECHNICAL FIELD

The invention relates to a food-grade blue encapsulates which comprises gelled proteins associated with metal ions and a colorant component. The colorant component comprises anthocyanins, anthocyanidins, or mixtures thereof. A process for producing the encapsulates is also disclosed.

### BACKGROUND OF THE INVENTION

Consumer concern in relation to the safety of synthetic colorants has led to the restricted application of artificial colorants in food. For instance, from July 20, 2010 onwards, some products containing azo-dyes must be packaged with a mandatory warning on the packaging: "May have an adverse effect on activity and attention in children".

One of the natural pigments with high potential for replacing artificial colorants is anthocyanin, which is responsible for red, purple and blue colours in many plants and fruits. However, the use of anthocyanins as blue colorant in food is still limited because of the low stability of their colour during processing and storage, and depending on formulation. Process and formulation parameters such as temperature or pH influence the stability of anthocyanins and anthocyanidins.

In an article entitled "Colour and stability of the six common anthocyanidin 3-glucosides in aqueous solutions" (Food Chemistry, 68, 101-107) Cabrita et al. describe the colour shift of the six common anthocyanins (3-glucosides of pelargonidin, cyanidin, peonidin, delphinidin, petunidin and malvidin) in the pH range 1-12 during a period of 60 days storage at 10 and 23°C. The analyses were performed in buffered aqueous solutions at different pH values. The conclusions of this article are that the colors, intensity and stability of the anthocyanins changed signicantly in the pH 1-12 range. In relatively strong acidic aqueous solutions (pH 1-3), all the anthocyanins occurred in the most intense reddish colours, typical for their flavylium forms, and were very stable even after 60 days of storage at 10°C. Anthocyanin stability and the red colour intensity decreased towards neutrality (pH 5-7). There was also a gradual colour shift to more bluish colours at neutral pH values.

This article does not address thermal processing of anthocyanins or the stability of the blue color over a broad pH range. On the contrary, this article confirms that the color of anthocyanins depends on the pH of the solution.

WO 79/01128 A1 relates to a colorant from a natural source which produces various colors in food and beverages. The colorant is the anthocyanin from "Heavenly Blue" Morning Glory, peonidin 3-(dicaffeylsophoroside)-5-glucoside. Gels having a pH from 2.0 to 8.0 were prepared by adding gelatine to a buffered solution of this anthocyanin. The colours ranged from purplish red to deep blue, depending on the pH of gel. The colors were stable for at least 320 hours. This document does not disclose thermal processing of the gel.

Sensient Technologies proposed a solution, currently in the market, named Gardenia Blue, which is produced by the reaction between iridoids extracted from the fruit of *Gardenia jasminoides* and α-amino acid with the presence of proteolytic enzyme. Paik et al. (2001) reported that the stability of the Gardenia Blue under different conditions depended on the type of amino acid used in the production of the colorant. Ecoflora and Wild companies also have developed blue colorants based on genipin-protein or genipin-aminoacids reactions. Ecoflora has submitted an application for approval of its product to the U.S. Food and Drug Administration (FDA). These colorants are not yet approved in the European Union nor in the U.S.A. for food applications.

Shaoyuan Xiong et al. (2006) (J. Agric. Food Chem. 54, 6201-6208) discuss the effect of ferric and ferrous ionis, pH and temperature on the stability and antioxidant activity of blackcurrant anthocyanins (BCA), as well as the recovery of BCA from a thermoreversible glucan gel.

Therefore there is a need for a natural blue colour which can be used in food products, in particular in dairy matrices, with a large pH range and which is stable under thermal processing and during storage under various conditions, including at ambient conditions, chilled conditions and frozen conditions. It is also important to ensure a sufficient supply of the natural blue encapsulate.

### SUMMARY OF THE INVENTION

It is an object of embodiments of the invention to fulfil the need for a food-grade natural blue colour. This object is solved by means of invention defined in the independent claims. The dependent claims further develop the central idea of the invention.

In a first aspect, the invention relates to a food-grade encapsulate comprising gelled proteins, a colorant component and metal ions, wherein said colorant component comprises anthocyanins, anthocyanidins, or mixtures thereof, wherein said encapsulate has a stable blue colour.

The inventors have found that it is important to combine the metal ions, and anthocyanin or anthocyanidin, with gelled proteins in order to stabilize the blue colour, both during thermal processing and storage.

In an embodiment, said metal ions are selected from the group consisting of Fe²⁺, Fe^{3+,} Cu²⁺, Al²⁺, Al³⁺, and mixtures thereof. Preferably, said metal ions are selected from the group consisting of Fe²⁺, Fe³⁺, and mixtures thereof. The metal ions are essential to give the blue colour by complexation with the anthocyanin or anthocyanidin.

Said encapsulate may be prepared from various food-grade proteins. In an embodiment, said proteins are selected from globular proteins, preferably from whey proteins, soy proteins, egg white proteins, pea proteins, lupin proteins, potato proteins, canola proteins, or mixtures thereof. In another embodiment, said proteins are micellar casein, acid caseins, caseinates, or mixtures thereof.

Advantageously, the encapsulate further comprises a polysaccharide component, or gelatine, or mixtures of a polysaccharide component and gelatine. In an embodiment, the polysaccharide component is selected from highly branched pectins, arabinogalactans, arabinogalactan-protein complexes, cereal arabinoxylans, or mixtures thereof. In another embodiment, the polysaccharide component is selected from high molecular weight polysaccharides and/or gelling polysaccharides, preferably selected from alginate, carrageenans, pectins, agar, guar gum, locust bean gum, or xanthan gum.

The encapsulate may be provided as a dried powder or as a gel or a dispersion in an aqueous solution. Preferably, the encapsulate has a pH ranging from 3.5 to 8.0 in an aqueous solution.

In a second aspect, the invention proposes a process for producing a food-grade encapsulate having a stable blue colour, comprising the steps of:
a) gelling a protein solution,
b) before or after step a), admixing metal ions selected from Fe²⁺, Fe^{3+,} Cu²⁺, Al²⁺, Al³⁺, and mixtures thereof, in the form of an aqueous solution or in the form of powder salts, to the protein solution,
c) before or after steps a) or b), adding a colorant component comprising anthocyanin, anthocyanidin, or mixtures thereof, to the protein solution.

In other words, addition of the metal ions, addition of the colorant component, or both, can be performed before or after gelling the protein solution.

Gelling a protein solution may comprise at least one of the following steps:
- heating the protein solution to a temperature from 70°C to 150°C, for a period of from 10 seconds to 2 hours, at a pH from 5.8 to 8.0, until gelification of said protein,
- adjusting the pH of the protein solution to the isoelectric point of said protein,
- adding a solution of said metal ions to the protein solution while keeping the pH constant.

In an embodiment, the protein solution has a concentration of 1 to 10% by weight of protein.

The process may further comprise adding a polysaccharide component to the proteins, before or after the step of gelling the protein solution.

The process thus leads to encapsulates in an aqueous composition. An optional further step is drying said aqueous composition to obtain a blue encapsulate powder.

A third aspect of the invention is a food product which comprises encapsulates according to the first aspect of the invention, or produced by a process according to the second aspect of the invention. Food products include beverages and food as such. An encapsulate which is in the form of a powder, is also part of the invention.

These and other aspects, features and advantages of the invention will become apparent to those skilled in the art upon reading the disclosure provided here in connection with the attached drawings. The detailed description, while indicating preferred embodiments of the invention, is only given by way of illustration of the invention.

### SHORT DESCRIPTION OF THE FIGURES

Figure 1 shows gel microparticles encapsulates containing polysaccharides, prepared according to Example 1, by light microscopy. A: gelled protein dispersed phase; B: gelled polysaccharide continuous phase.
Figure 2 shows the results of the heat stability trial of Example 5.
Figure 3 shows the results of the shelf stability trial at 4°C and 20°C of Example 6.
Figure 4 shows the results of the heat stability trial of Example 7.
Figure 5 shows the results of the shelf stability trial of Example 8.
Figure 6 shows the porous structure of molecular complexes encapsulates prepared according to Example 4 (light microscopy). The scale bar represents 15 microns.
Figure 7 shows the polysaccharide labelling of molecular complexes encapsulates prepared according to Example 4 (light microscopy). The scale bar represents 20 microns.
Figure 8 shows the structure of molecular complexes prepared according to Example 4, by atomic force microscopy. The scale bar represents 1 micron.

### DETAILED DESCRIPTION OF THE INVENTION

### Colour description

A variety of systems have been developed throughout time to describe and measure colours as accurately as possible. Albert H. Munsell developed a colour system by taking measurements of human visual responses. The Munsell colour system consists of three independent dimensions which can be represented cylindrically as an irregular colour solid. These dimensions are hue, chroma and value. The hue is measured by degrees around horizontal circles. The chroma (colour purity or colourfulness) is measured radially outward from the neutral (gray) vertical axis, from 0 (gray) to 12 (pure colour). The value (lightness) is measured vertically from 0 (black) to 10 (white). Determination of the colour of a sample is performed by comparing the sample with a standard on a chart. Such charts are commercially available.

Other colour systems can be mentioned, such as the CIELab colour space or the RGB colour model.

Within the context of the invention, "blue" is defined in the Munsell system as a colour which has a Hue equal to purple-blue (PB), blue (B) or blue-green (BG), a Chroma equal or greater than 2, and a Value within all the possible range of the color space, preferably ranging from 2 to 8. For the Hue equal to blue (B) or blue-green (BG), the Chroma is preferably greater than 2.

The colour is considered as unstable if after processing or storage the chroma is lower than 2, in the Munsell colour system. When CIELab colour space is used, an example of unstable sample is a value of L about 40 and a and b having positive values. Representative processing conditions for assessing stability is a heat treatment at 95°C for 5 seconds or at 80°C for 30 minutes. Representative storage conditions are 6 months at 4°C and 20°C.

### Colorant component

In food-grade encapsulates according to the invention, the colorant component comprises anthocyanins, anthocyanidins, or mixtures thereof. Anthocyanins and anthocyanidins are common plant pigments of the flavonoid class, which are well-known in the art. Anthocyanins are glycosides that yield coloured aglycons anthocyanidins upon hydrolysis. Unless the context dictates otherwise, a reference to anthocyanin will encompass both anthocyanin and anthocyanidin, i.e. the glycosides and the aglycons.

Examples of anthocyanins include antirrhinin, chrysanthenin, malvin, myrtillin, oenin, primulin, pulchellidin 3-glucoside, pulchellidin 3-rhamnoside, and tulipanin. Examples of 3-hydroxyanthocyanidins include 5-desoxy-peonidin, aurantinidin, cyanidin, 6-hydroxycyanidin, delphinidin, fisetinidin, guibourtinidin, pelargonidin, and robinetinidin. Examples of 3-deoxyanthocyanidins include apigeninidin, columnidin, diosmetinidin, gesneridin, luteolinidin, and tricetinidin. Examples of O-methylated anthocyanidins include 5-desoxy-malvidin, capensinidin, europinidin, hirsutidin, malvidin, peonidin, petunidin, pulchellidin, and rosinidin. The most common naturally occurring anthocyanins are the 3-O-glycosides and 3,5-di-O-glycosides of cyaniding, delphinidin, peonidin, petunidin, pelargonidin and malvidin.

Anthocyanins may be found in many plants. They occur in all plant tissues, including leaves, stems, roots, flowers and fruits. For instance, sources of anthocyanins include extract made from chokeberry, strawberry, apple, cherry, plum, black currant, red currant, raspberry, blackberry, elderberry, cranberry, blueberry, red cabbage, purple/black carrot, eggplant, red grapes, blood orange or purple corn. This list cannot be considered as exhaustive. The skilled person will recognize other sources, depending for instance on their regulatory approval for food applications. Usually, they are sold as concentrate plant extracts or juices. Suppliers include Diana Naturals, GNT, Wild, Naturex, Christian Hansen, Food Ingredients Solutions, or Sensient Technologies Corporation.

Anthocyanin identification and titration can be performed according to published methods. For instance, a method for anthocyanin titration in extracts, and HPLC analysis of anthocyanins is described, in Jakobek et al. (2007) "Anthocyanin content and antioxidant activity of various red fruit juices" Deutsche Lebensmittel-Rundschau 103 (2), 58-64. The article "Determination of Total Monomeric Anthocyanin Pigment Content of Fruit Juices, Beverages, Natural Colorants, and Wines by the pH Differential Method: Collaborative Study" in Lee et al. (2005) describes the pH differential method to titrate anthocyanins.

### Metal ions

As mentioned above, various metal ions are used for complexation with the anthocyanin. Preferably, metal ions are selected from the group consisting of Fe²⁺, Fe^{3+,} Cu²⁺, Al²⁺, Al³⁺, and mixtures thereof. Metal ions are provided as salts or in the form of a solution of such salts. Salts can be inorganic salts or organic salts. Inorganic salts include chloride and sulphate. Other foodgrade inorganic salts could be considered. Organic salts include fumarate, lactate, citrate, gluconate, succinate, saccharate, glycerophosphate and tartrate. For instance, iron sulphate is used. Such products are commodities in the food industry.

### Encapsulates

According to the invention, encapsulates are prepared by a microencapsulation process. Such processes are described for instance in an article by Sagalowicz and Leser "Delivery systems for liquid food products" (Current Opinion in Colloid & Interface Science 15 (2010) 61-72). Another reference that discusses microencapsulation processes is the book edited by Zuidam and Nedovic "Encapsulation Technologies for Active Food Ingredients and Food Processing" (2008). Upon microencapsulation, the colorant component and the metal ions are embedded in a gelled protein matrix. In other words, a gel is obtained on a sub-micronic, micrometre or millimiter scale, which forms a stable colloidal dispersion of gelled protein, colorant component, and metal ions. Depending on which type of protein is used, different species of encapsulates may be obtained, such as discrete gel microparticles and molecular complexes, wherein the protein matrix is gelled. Depending on the gel size distribution, the encapsulates can range from transparent blue to opaque, or milky, blue.

In the frame of this invention, gelled proteins are defined as an assembly of 100 to thousands of monomeric protein units forming a 3-dimensional network enable to retain solvent, mostly water. In this assembly, protein monomers are generally not in their native state and are held together by non-covalent (electrostatic, hydrophobic and/or hydrogen bonds) and/or covalent bonds. All physicochemical features describing protein gels are detailed in the review paper by Clark and Ross-Murphy "Structural and mechanical properties of biopolymer gels" (Advances in Polymer Science, 83, 57-192). For instance, gelled proteins can be obtained by heat treatment of globular proteins above their denaturation temperature leading to aggregation and gelation. Alternatively, gelled proteins can be formed by aggregation and gelation of proteins close to their isoelectrical pH.

In an embodiment, the encapsulates also comprise a polysaccharide component, which improves the stability of the gelled protein matrix and colorant component and metal ion complexes within the matrix. In another embodiment, the encapsulates comprise gelatine. It has been found that, similarly to a polysaccharide component, gelatine may improve the stability of the gelled protein matrix and colorant component and metal ion complexes within the matrix. In yet another embodiment, the encapsulates comprise both a polysaccharide component and gelatine. This will be described in greater details below.

The size and structure of the encapsulates depend mainly on the nature of the proteins used to prepare said encapsulates, the method of preparation, as well as that of the optional polysaccharide component, or gelatine.

Without wishing to be bound by theory, the inventors believe that the gelled protein matrix protects the anthocyanin during processing (temperature, pH) and storage.

The production of the encapsulates will now be described in greater details.

### Gel microparticle encapsulates

The gel microparticle encapsulates consist of gelled protein microparticles within a gelled polysaccharide matrix. The gel microparticle encapsulates are discrete particles with a mean diameter ranging from 20 to 5000 microns. The gelled protein microparticles have a mean diameter ranging from about 200 nm to about 20 microns.. The mean diameter can be measured by diffusion light scattering using for example a Malvern MasterSizer 2000 (laser diffraction unit, with a size range from 0.02 to 2000 microns) equipped with a Malvern Hydro 2000G (large sample dispersion unit), a Honeywell water pressure reducer (maximum deionised water pressure: 1 bar) and a ERMA water degasser (to reduce the dissolved air in the deionised water). The measurements are calculated in the Malvern software based on the Mie theory. The following parameters are used to measure the size distribution of the gel microparticle encapsulates: 1.460 for the refraction index of the particles, 0.01 for the particles absorption, the dispersant used is water with a refraction index of 1.330.

In a first embodiment of the invention, gel microparticle encapsulates are produced with globular proteins as a protein source. Globular proteins include whey proteins, soy proteins, egg white proteins, pea proteins, lupin proteins, potato proteins, canola proteins, or mixtures thereof. At least two methods of production can be proposed: a drip method or an extrusion method.

A globular protein solution is heat treated to denaturate the proteins. Usually, the protein solution has a concentration of 1 to 11 % by weight of protein, preferably from 8 to 10% by weight. The conditions for heat treatment depend on the globular protein. Usually, a balance between heating time and temperature is found, in order to ensure that a minimum ratio of denaturation is achieved. These conditions can be determined so that at least 90% of the proteins are denatured, preferably at least 95%, and even more preferably at least 98%. Preferably, the protein solution is heated to a temperature from 70°C to 150°C, for a period from 10 seconds to 2 hours, at a pH from 5.8 to 8.0. For instance, whey protein isolate can be treated for at least 30 minutes at a temperature of 80°C, at a pH of about 7, to achieve a denaturation ratio of above 99%.

The denatured proteins are then transferred into a metal ion solution by dripping or extruding. This results in gelation of the proteins. The drop break-up can be induced by cutting a solution jet, by jet vibration or by jet pressure. The size of the gelled particles will depend on the size of the nozzle, the rate of cutting, the vibration mode and/or pressure applied. Such process parameters can be selected by the skilled person. The metal ions have been described above. Preferably, the metal ion solution has a concentration of 0.1 to 0.6 M of metal salts.

If the protein denaturation is conducted with a dilute protein solution, then it may be desirable to concentrate the protein solution to a concentration of 6 to 10% by weight prior to transferring the protein solution into the metal ion solution.

The colorant component, such as a vegetable extract or juice concentrate, can be added before or after the denaturation of the proteins, or both. Alternatively the colorant component can be added after gelling the proteins, or even after harvesting the gel microparticle encapsulates from the metal ion solution. As disclosed above, the colorant component comprises anthocyanins. The amount of colorant component to be added to the proteins depends on the target blue colour. Preferably, the gel microparticle encapsulates contain from 0.01 to 0.2% by weight of anthocyanins in the wet gel microparticles.

This process results in a suspension of gel microparticle encapsulates with a blue colour, in an aqueous medium. The microparticle encapsulates can be harvested from the aqueous medium, for instance by centrifugation or filtration.

Advantageously, the microparticle encapsulates are then dried. Different drying methods can be implemented, such as spray-drying or fluidized bed drying. This results in a powder comprising blue gelled microparticles.

### Gel microparticles encapsulates with polysaccharide component

In a second embodiment of the invention, gel microparticle encapsulates are produced with caseins or globular proteins as a protein source. Caseins include micellar casein, acid caseins, caseinates, or mixtures thereof. As in the first embodiment, at least two methods can be proposed: a drip method or an extrusion method. Globular proteins have been described in the first embodiment above.

In a variant of the second embodiment, a casein solution is first prepared, preferably having a concentration from 1 to 10% by weight of casein. More preferably, the casein concentration ranges from 6 to 9% by weight. A metal ion solution is then admixed to the casein solution, under stirring. Metal ions have been described above. Preferably, the solution comprises sodium citrate. Preferably, the metal ion solution is at a pH from 5 to 7.

A first solution comprising high molecular weight polysaccharides and/or gelling polysaccharides is then admixed to the casein and metal ion solution, still under stirring. Preferably, said polysaccharides are selected from alginate, carrageenans, pectins, agar, guar gum, locust bean gum, or xanthan gum. In this variant, the addition of such polysaccharides is necessary in order to achieve stability of the blue colour of the gel microparticle encapsulates.

Preferably, the total biopolymer content and the ratio between protein and polysaccharides should be such that the mixture falls into an incompatible (2-phase) region of a phase diagram. The incompatible region of the phase diagram can be determined by optical microscopy. This determination can be done as follows: a mixture of protein and polysaccharide solution is stained with rhodamine, then put on glass slides and covered with cover slides. The sample is then observed under light excitation of 450-490 nm wavelength in a Leica DMR microscope coupled with a camera DC 300F. The images are taken using the 40 x or the 10 x objectives. All mixtures that show a dispersed and a continuous phase are considered as incompatible. For achieving a dispersed phase of protein, the phase volume of the protein should be below 50%.

For instance, when alginate is used as a polysaccharide, then the caseinate:alginate ratio can be 2:1 by weight. When whey protein (denatured) is used with alginate as a polysaccharide, then the whey:alginate ratio can be 4:1 by weight. When whey protein (denatured) and carrageenan are used the whey:carrageenan ratio can be 7:1 by weight.

Then, the pH of the casein and polysaccharide solution is adjusted to the isoelectric point of the casein. This can be performed by addition of an acidic solution, preferably progressively, until the isoelectric point is reached. This results in gelling of the casein. For instance, a 0.1 M citric acid solution can be used.

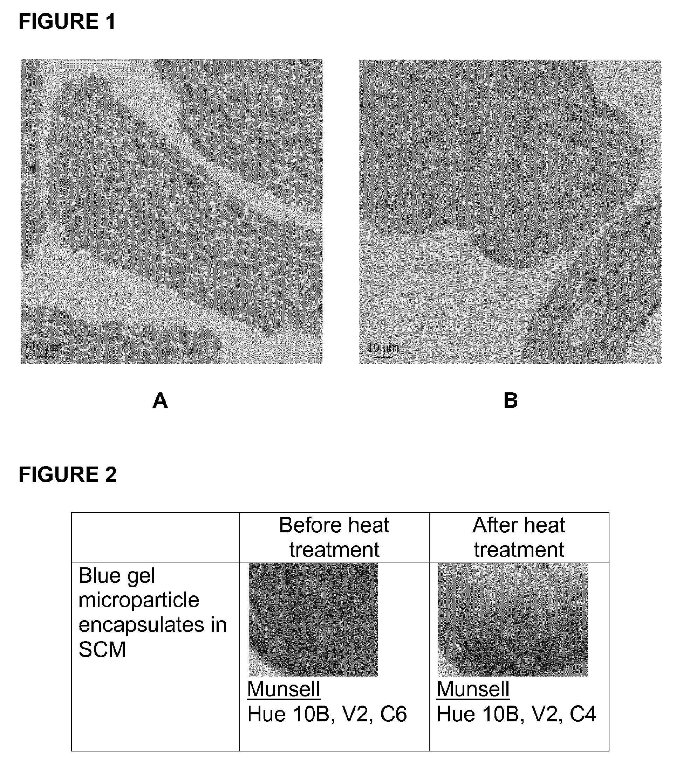

As can be seen on Figure 1, the gel microparticles are discrete structures that have a gelled protein dispersed phase in a gelled polysaccharide continuous phase.

In another variant of the second embodiment, a globular protein solution is first prepared and the proteins are denatured using a heat treatment, as described in relation with the first embodiment. Then, a first solution containing polysaccharide is added to the globular protein solution. Details are similar to the first variant above. Then, the pH of the globular protein and polysaccharide solution is adjusted as described above in relation with the first variant.

The protein and polysaccharides acidified solution is then transferred into a second solution containing calcium, zinc or potassium cations or other ions that could gel a high molecular weight polysaccharide, by dripping or extruding. This acidified solution can also be spray-dried or spray-chilled. Preferably, when the polysaccharide is alginate, the second solution contains calcium or zinc cations. Preferably, when the polysaccharide is carrageenan, the second solution contains calcium or potassium cations. The drop break-up can be induced by cutting a solution jet, by jet vibration or by jet pressure. The size of the gelled particles will depend on the size of the nozzle, the rate of cutting, the vibration mode and/or pressure applied. Such process parameters can be selected by the skilled person. The counterions in the second solution can be a halide, such as chloride or iodide. Other foodgrade counterions can be used, such as [lactate or gluconate]. Preferably, the second solution is a calcium chloride solution with a concentration of 0.1 to 0.6 M of metal salts.

The colorant component, such as a vegetable extract or juice concentrate, can be added together with the metal ion solution, or together with the polysaccharide solution, or together with the protein/metal ion solution, or at both steps. Alternatively the colorant component can also be used to acidify the protein-polysaccharide mixture until pH 5 or protein isoelectric point, or be added after gelling the caseins or after the microparticle encapsulates are prepared (before or after drying). As disclosed above, the colorant component comprises anthocyanins. The amount of colorant component to be added to the caseins depends on the target blue colour. Preferably, the gel microparticle encapsulates contain from 0.01 to 0.2% by weight of anthocyanins in the wet gel microparticle encapsulates.

This process results in a suspension of gel microparticle encapsulates with a blue colour, in a liquid medium. The microparticle encapsulates can be separated from the liquid medium, for instance by centrifugation or filtration.

Advantageously, the microparticle encapsulates are then dried. Different drying methods can be implemented, such as spray-drying or fluidized bed drying. This results in a powder comprising blue gelled microparticle encapsulates.

The gel microparticle encapsulates prepared according to the first and second embodiments are discrete particles that can be seen with the naked eye. They can be used as visual cues in a final food product. They can be added to the final food product in the form of an aqueous product or of a dried product.

### Molecular complexes encapsulates

Encapsulates consisting of molecular complexes have a (sub)micron dimension. Preferably, said molecular complexes have a dimension of from 50 to 600 nm, preferably about 100 nm. Such molecular complexes may be considered as primary complexes. Primary complexes may be bridged together by a polysaccharide component, or gelatine, when they are used, to form larger structures, or secondary molecular complexes encapsulates. Such secondary molecular complexes may have a dimension of from 200 nm to 100 microns. The dimension of the molecular complexes can be assessed by dynamic light scattering using for example a Zetasizer Nano ZS apparatus (Malvern Instruments, Ltd.) The apparatus is equipped with a He-Ne laser emitting at 633 nm and with a 4.0 mW power source. The instrument uses a backscattering configuration where detection is done at a scattering angle of 173° using an avalanche photodiode. The molecular complex encapsulates are diluted to less than 1.0 wt% in Millipore water and poured in squared plastic cuvettes (Sarstedt, Germany). Measurements are performed at 25°C. Depending on the sample turbidity the pathlength of the light is set automatically by the apparatus. The autocorrelation function G₂(t) is calculated from the fluctuation of the scattered intensity with time. From the polynomial fit of the logarithm of the correlation function using the "cumulants" method, the z-average hydrodynamic diameter of the particles is calculated assuming that the diffusing particles are monodisperse spheres.

When preparing molecular complexes, globular proteins are preferably used as a protein source. Globular proteins include whey proteins, soy proteins, egg white proteins, pea proteins, lupin proteins, potato proteins, canola proteins, or mixtures thereof. As disclosed in relation with gel microparticle encapsulates, a globular protein solution is heat treated to denaturate the proteins. This results in gelling of the globular protein due to hydrophobic interactions and formation of covalent bonds. Usually, the protein solution has a concentration of 1 to 8% by weight of protein, preferably between 3 and 6% by weight.

In a third embodiment of the invention, the metal ion is added to the protein solution before the heat treatment. The metal ion is described in details above. Preferably, it is added as a salt in the dry state. It can also be added as a solution. Excess water is then removed, for instance by evaporation or microfiltration.

The inventors have found that the stability of the molecular complexes can be improved by adding a polysaccharide component to the protein solution, after the heat treatment. The polysaccharide component is preferably highly branched pectins, arabinogalactans, arabinogalactan-protein complexes, cereal arabinoxylans, or mixtures thereof.

The colorant component, such as a vegetable extract, can be added before or after the denaturation of the proteins, or both. Alternatively the colorant component can be added after removal of excess water or addition of the polysaccharide component. As disclosed above, the colorant component comprises anthocyanins. The amount of colorant component to be added to the proteins depends on the target blue colour. Preferably, the molecular complexes contain from from 0.04 to 0.4% by weight by weight of anthocyanins.

Advantageously, the pH of the molecular complexes dispersion can be adjusted between the values of 2.0 and 7.0, preferably between pH values of 4.0 and 5.0.

Advantageously, the molecular complexes are then dried. Different drying methods can be implemented, such as spray-drying or freeze-drying. This results in a powder comprising blue encapsulates.

In a fourth embodiment of the invention, the metal ion is added to the protein solution after the heat treatment. The metal ion is described in details above. Preferably, it is added as a solution. After stirring, a polysaccharide component is added to the gelled proteins. The polysaccharide component is preferably highly branched pectins, arabinogalactans, arabinogalactan-protein complexes, cereal arabinoxylans, or mixtures thereof.

The colorant component, such as a vegetable extract, can be added before or after the denaturation of the proteins, or both. Alternatively the colorant component can be added after addition of the polysaccharide component. As disclosed above, the colorant component comprises anthocyanins. The amount of colorant component to be added to the proteins depends on the target blue colour. Preferably, the molecular complexes contain from 0.04 to 0.4% by weight by weight of anthocyanins.

Advantageously, the pH of the molecular complexes dispersion can be adjusted between the values of 2.0 and 7.0, preferably between pH values of 4.0 and 5.0.

Advantageously, the molecular complexes are then dried. Different drying methods can be implemented, such as spray-drying or fluidized bed drying. This results in a powder comprising blue encapsulates.

The molecular complexes obtained according to third and fourth embodiments can be use as a colorant for providing a homogeneous colour to a food product. They can be added to the final food product, as an ingredient, in the form of an aqueous product or of a powder.

As mentioned above, the invention proposes a process for producing a food-grade encapsulate having a stable blue colour, comprising the steps of:
a) gelling a protein solution,
b) before or after step a), admixing metal ions selected from Fe²⁺, Fe^{3+,} Cu²⁺, Al²⁺, Al³⁺, and mixtures thereof, in the form of an aqueous solution or in the form of powder salts, to the protein solution,
c) before or after steps a) or b), adding a colorant component comprising anthocyanin, anthocyanidin, or mixtures thereof, to the protein solution.

Hence, several combinations of steps are encompassed within the context of the invention: a-b-c, a-c-b, b-a-c, b-c-a, c-a-b and c-b-a. Each of these combinations can be followed by a drying step.

Final food product include chilled dairy products (yogurt, cream, desserts, mousse), ambient dairy products (condensed milk, creamer powder, milk powder), frozen food products (ice cream, sorbet), confectionary products (sugar candies) and culinary (soups, bouillon) or beverages. Such final food products can contain either or both forms of food-grade encapsulate: gel microparticle encapsulates or molecular complexes. In addition, several colours can be obtained in the final food product by mixing different proportions of the blue powder with another food grade colorant, e.g. green is obtained by mixing yellow and blue. Hence, applying the principles of additive colour synthesis, it is possible to obtain several other colours.

Depending on the size of the encapsulates, the blue colour in the final product can vary from homogenous blue to visual cues.

It should now be mentioned that the invention provides a food-grade natural and stable blue colour. Indeed, as will be shown in the examples, the encapsulates exhibit a stable colour, both during processing and during storage. The blue colour is imparted thanks to natural plant extracts or juice concentrates that contain anthocyanins, and are then complexed with metal ions. Thus, such blue colour does not derive from a synthetic molecule. Although natural blue colours are known, it must be noted that the inventors believe it is the first time that a stable and food-grade blue colour is achieved by using gelled proteins.

The colour of the encapsulates depends on the metal ion concentration, the anthocyanin concentration and the pH. When the metal ion concentration or the anthocyanin concentration increases, the chroma increases and the value decreases (in the Munsell colour system).

The encapsulate can be used for colouring food products, either food as such or beverages. In an embodiment, the encapsulates are added to the food product as an ingredient. They can be added as an aqueous composition or as a dry powder.

### EXAMPLES

In the examples below, the fruit or vegetable concentrate may be Cherry Red (GNT), Red cabbage extract (Diana Naturals), or Purple carrot juice (Diana Naturals). The colours were measured in CIELab colour space and converted to the Munsell colour space.

Other ingredients are of food-grade quality and can be supplied from Davisco Foods International, Dr. Paul Lohmann, CP Kelco, Emmi Schweiz AG, International Specialty Products Inc.

### Example 1: Preparation of microparticle encapsulates with sodium caseinate and polysaccharide component

Final composition of encapsulates (before drying): 3 wt% Na-caseinate / 1.4 wt% Na-alginate / 0.21 wt% Fe / 0.4 wt% Vegetable juice

### Description of the process:

1) Mix 37.5 g of 8 wt% Na-caseinate solution with 0.5 g of 1.2M FeSO₄ /1.2 M Na-citrate solution for 15 min.
2) Add 56g of 2.5 wt% Na-alginate solution and stir for 15 min.
3) Add about 9 g of 0.1 M citric acid solution while stirring to reduce the pH to 5.0 for gelling the protein with iron. The decrease of pH is done gradually, which means that the mixture is stirred for 1 min at each decrease of 0.2 units pH.
4) Drip the mixture (pH 5.0) onto 8 wt% calcium chloride solution under stirring (keep under stirring for 30 min). The drop break-up can be induced by cutting a solution jet, by jet vibration or by jet pressure. The size of the gelled particles (20-5000 µm) will depend on the size of nozzle, rate of cutting, vibration mode and/or pressure applied.
5) Separate the encapsulates by filtration or by centrifugation.
6) Add the encapsulates in a 0.4 wt% fruit or vegetable juice concentrate and stir this dispersion for 30 min.
7) Dry the encapsulates by spray-drying (small particles) or by fluidized bed (previous need to separate the particles).

### Observation by light microscopy (Figure 1)

Gel microparticles were stabilized with a fixation in anhydrous glutaraldehyde in methanol and embedded in Spurr resin. Thin sections (0.5 micron thickness) were stained either for protein (Light green) and polysaccharide (Ruthenium red), or with Toluidine blue (general staining). Microscope Zeiss Axioplan II with digital camera Axiocam MRc5 was used. Figure 1 shows the protein gelled dispersed phase (A) and the polysaccharide gelled continuous phase (B).

### Example 2: Preparation of microparticle encapsulates with whey protein isolate (WPI)

Final composition of dried encapsulates: ∼90 wt% WPI / 2 wt% Fe / 0.4 wt% vegetable juice

### Description of the process steps:

1) Denature fully an 11 wt% WPI solution at pH>5.9 (preferably at pH 7) by heating the solution at 80°C during 30 min (or equivalent time/temperature combination).
2) Drip the mixture onto a 5% iron sulfate solution under stirring (keep under stirring for 30 min).
3) Follow steps 5-7 from the example 1.

### Example 3: Preparation of molecular complex encapsulates with whey protein isolate

Final composition of encapsulates (before drying): 4 wt% WPI / 3.5 wt% vegetable juice / 0.11 wt% Fe

### Description of the process steps:

1) Denature a 6 wt%% WPI / 0.16 wt% mM Fe solution at pH 6.4-7.0 at 85°C during 15 min
2) Mix 67g of the denatured solution with 33 g of 10.5 wt% vegetable juice solution; adjust the pH constantly so that it does not drop below pH 6.0.
3) Spray-dry the mixture.

### Example 4: Preparation of molecular complex encapsulates with whey protein isolate and acacia gum

Final composition of encapsulates (before drying): 4wt% WPI / 2.8wt% acacia gum / 4.5wt% vegetable juice / 0.017 wt% Fe

### Description of the process steps:

1) Mix and hydrate 4 wt% WPI powder in water
2) Add 0.09 wt% of FeSO₄ • 7H₂O powder and adjust the solution pH to 6.5
3) Denature the WPI-iron mixture at pH 6.5 at 85°C during 15 min
4) Add 2.8 wt% acacia gum powder leading to a final pH value between 5.5 and 6.0.
5) Add 4.6% of vegetable juice concentrate adjusting continuously the pH to 5.0 with 2M NaOH (about 0.8wt% of total mixture)
6) Spray-dry the mixture.

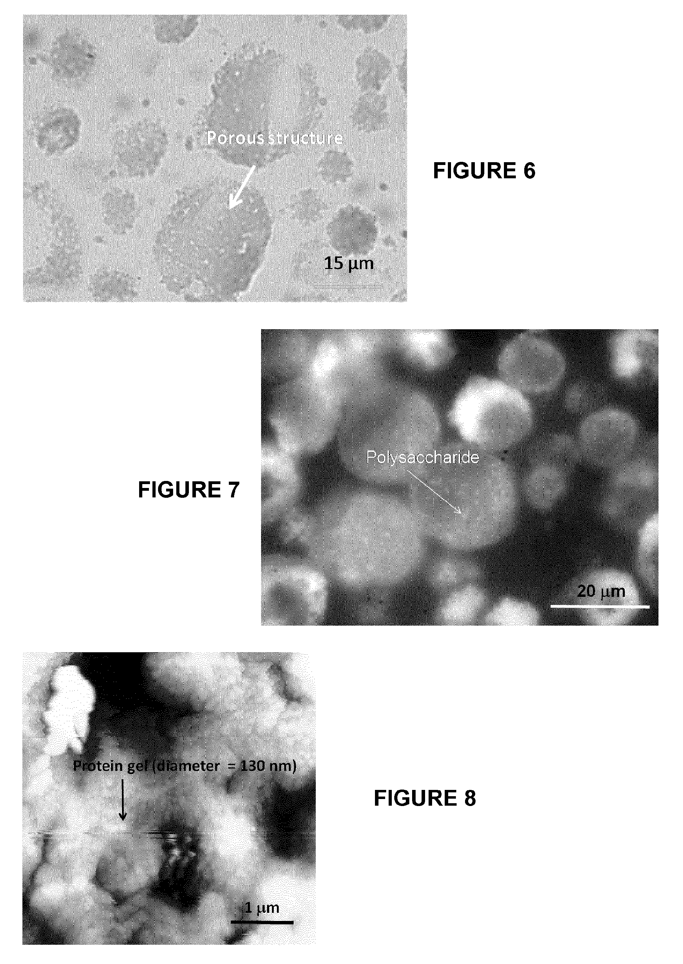

### Observation by light microscopy (Figures 6 and 7)

The Acacia gum was labelled using a FITC (fluorescein isothiocynate) lectin (Bandeiraea simplicifolia , Sigma, #9381) at a concentration of 50 µg /mL in PBS pH 7.2 for 2 hours. They were observed by epifluorescence with the Polyvar microscope (Excitation: 488 nm ; Emission: >505 nm).

### Observation by atomic force microscopy (AFM) (Figure 8)

The glass slides with the sections were attached to a magnetic plate and put onto the magnetic sample holder of the AFM (PSIA, XE-100). Images were acquired in the intermittent contact mode (tapping mode) at a rate ranging from 1 to 2.5 Hz using SSS-NCLR (Nanosensors) tips (Thickness 7 +/- 1 µm. Length 225 +/-10 µm, Width: 28 +/- 7.5 µm, Resonance Frequency: 146-236 kHz, Force constant 20-98 N/m, Tip height 10-15 µm, Tip radius: 2 nm).

As can be seen from Figures 7 and 8, protein gels of about 130nm diameter are bridged together by Acacia gum, to form secondary molecular complexes of between 5 and 20 microns diameter.

### Example 5: Stability of blue colour from microparticle encapsulate during Sweetened Condensed Milk processing

Stability of the colour of blue microparticle encapsulates over heat processing (95°C, 5 seconds) was assessed in sweetened condensed milk (SCM) during a bench scale trial. Table 1 below shows the Munsell color ranking. Figure 2 provides pictures of the microparticles. The microparticles were made according to example 3 with sodium caseinate.

The results (Munsell notation) show that the color of the blue microparticles is stable during heat treatment at 95°C, 5 seconds in SCM.

**Table 1**

| | Before heat treatment | After heat treatment |
|---|---|---|
| Blue gel microparticle encapsulates in SCM | Munsell | Munsell |
| | Hue 10B, V2, C6 | Hue 10B, V2, C4 |

### Example 6: Stability of blue colour during storage of Sweetened Condensed Milk containing microparticle encapsulate

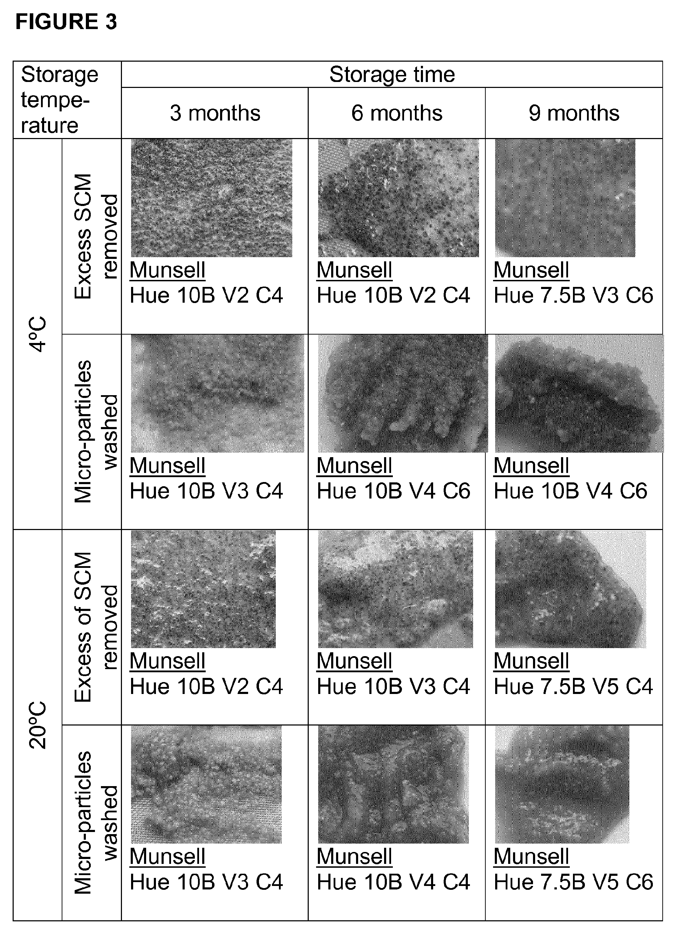

Stability of the blue colour over time was assessed in SCM containing gel microparticle encapsulates. The storage test was performed at 3 points in time: 3, 6 and 9 months, at 4°C and 20°C. Table 2 below shows the Munsell colour ranking in SCM and after washing. Figure 3 provides pictures of the microparticles.

The results are that the colour remains stable even over 9 months at 20°C storage temperature.

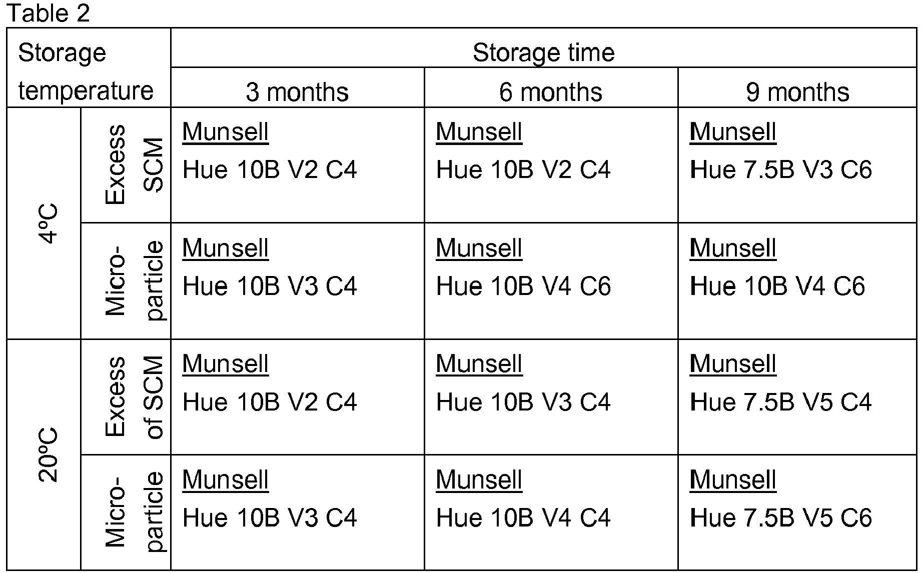

### Example 7: Stability of blue colour from molecular complex encapsulates during Sweetened Condensed Milk processing

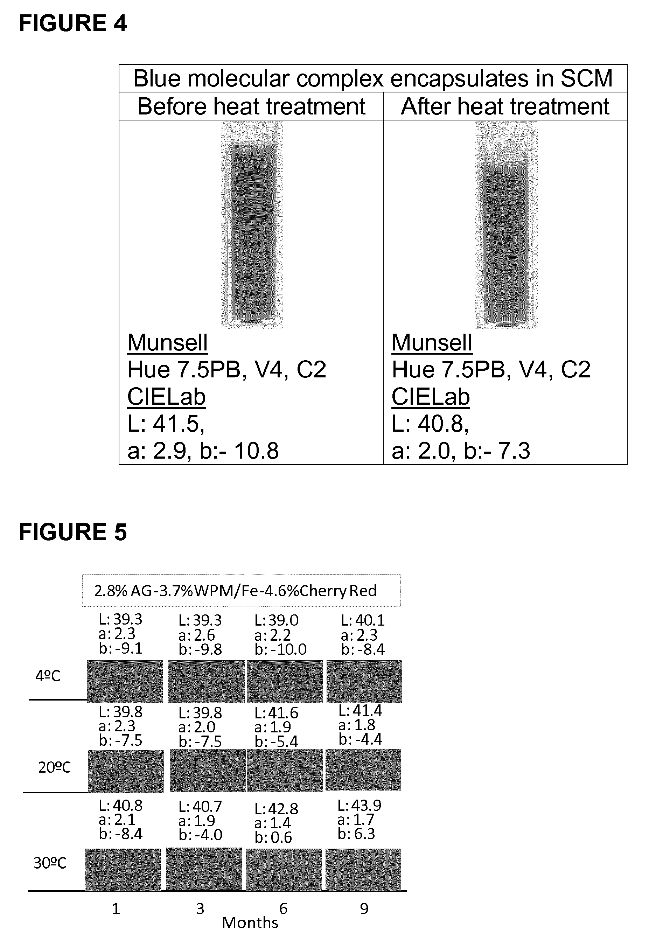

Stability of the colour of blue microparticle encapsulates over heat processing (95°C, 5 seconds) was assessed in sweetened condensed milk (SCM) during a bench scale trial. Table 3 below shows the Munsell and the CIELab color spaces. The measurement was done in the CIELab system and the values converted to Munsell color space. Figure 4 provides pictures of the coloured Sweetened Condensed Milk. The microparticles were made according to example 4.

The results (Munsell notation) show that the color of the blue microparticles is stable during heat treatment at 95°C, 5 seconds in SCM.

**Table 3**

| | Before heat treatment | After heat treatment |
|---|---|---|
| Blue molecular complex encapsulates in SCM | Munsell | Munsell |
| | Hue 7.5PB, V4, C2 | Hue 7.5PB, V4, C2 |
| | CIELab | CIELab |
| | L: 41.5, a: 2.9, b:- 10.8 | L: 40.8, a: 2.0, b:- 7.3 |

### Example 8: Stability of blue colour during storage of Sweetened Condensed Milk containing molecular complex encapsulates

Stability of the blue colour over time was assessed in SCM containing molecular complex encapsulates. Molecular complex encapsulates prepared as described in Example 7 were added to sweetened condensed milk (SCM) before the heat treatment step (95°C/5s). Samples of SCM were stored in glass jars in a dark room at three temperatures: 4°C, 20°C, and 30°C. The stability of the blue colour was evaluated over shelf-life (1, 3, 6 and 9 months). Figure 5 provides pictures and the L, a, b colour values of the sweetened condensed milk containing the blue molecular complex encapsulates. The measurement was done in the CIELab system.

The results are that the colour remains stable after 9 months up to 20°C storage temperature. At 30°C the colour was stable up to 6 months shelf-life. At this temperature, the colour degradation was partially caused by Maillard reaction in sweetened condensed milk, which induce a yellow-brown colour.

In the context of the specification, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention.

It will be understood that the materials used and the chemical details may be slightly different or modified from the descriptions herein without departing from the methods and compositions disclosed and taught by the present invention.

Although preferred embodiments have been described in the foregoing description, it will be understood that the invention is not limited to the specific embodiments disclosed. Various modifications may become apparent to those of ordinary skill in the art and may be acquired from practice of the invention. Individual features mentioned in different claims, may possibly be combined advantageously, and mention of these features in different claims does not exclude that a combination of features is not possible and advantageous.

## Claims

1. A food-grade encapsulate exhibiting a diameter between 50 nm and 5 mm comprising gelled proteins, a colorant component and metal ions selected from the group consisting of Fe²⁺, Fe³⁺, Cu²⁺, Al²⁺, Al³⁺, and mixtures thereof, wherein said colorant component comprises anthocyanin, anthocyanidin, or mixtures thereof, wherein said encapsulate has a stable blue colour.

2. The encapsulate according to claim 1, wherein said metal ions are selected from the group consisting of Fe²⁺, Fe³⁺, and mixtures thereof.

3. The encapsulate according to any one of claims 1 or 2, wherein said proteins are selected from globular proteins, preferably from whey proteins, soy proteins, egg white proteins, pea proteins, lupin proteins, potato proteins, canola proteins, or mixtures thereof.

4. The encapsulate according to any of claims 1 to 3, wherein said proteins are micellar casein, acid caseins, caseinates, or mixtures thereof.

5. The encapsulate according to any of claims 1 to 4, which further comprises a polysaccharide component, or gelatine, or mixtures of a polysaccharide component and gelatine.

6. The encapsulate according to claim 5, wherein the polysaccharide component is selected from highly branched pectins, arabinogalactans, arabinogalactan-protein complexes, cereal arabinoxylans, or mixtures thereof.

7. The encapsulate according to claim 5, wherein the polysaccharide component is selected from high molecular weight polysaccharides and/or gelling polysaccharides, preferably selected from alginate, carrageenans, pectins, agar, guar gum, locust bean gum, or xanthan gum.

8. The encapsulate according to any one of claims 1 to 7, which has a pH ranging from 3.5 to 8.0.

9. A process for producing a food-grade encapsulate having a stable blue colour, comprising the steps of:
a) gelling a protein solution,
b) before or after step a), adding a solution of metal ions selected from Fe²⁺, Fe^{3+,} Cu²⁺, Al²⁺, Al³⁺, and mixtures thereof, to the protein solution,
c) before or after steps a) or b), adding a colorant component comprising anthocyanin, anthocyanidin, or mixtures thereof, to the protein solution.

10. The process according to claim 9, wherein step a) comprises at least one of the following steps:
- heating the protein solution to a temperature from 70°C to 150°C, for a period of from 10 seconds to 2 hours, at a pH from 5.8 to 8.0, until gelification of said protein,
- adjusting the pH of the protein solution to the isoelectric point of said protein,
- adding a solution of said metal ions to the protein solution while keeping the pH constant,
wherein the protein solution has a concentration of 1 to 10% by weight of protein.

11. The process according to any one of claims 9 or 10, which further comprises adding a polysaccharide component to the protein solution, before or after step a).

12. The process according to any one of claims 9 to 11, which comprises a step of drying after steps a), b), and c) have been performed.

13. A food product comprising encapsulates according to any one of claims 1 to 8, or produced by a process according to any one of claims 9 to 12.

14. The encapsulate according to any one of claims 1 to 8, which is in the form of a powder.
